# EUROPÄISCHE PATENTSCHRIFT

(11) **EP 2 554 574 B1**
(45) Veröffentlichungstag und Bekanntmachung des Hinweises auf die Patenterteilung: **12.09.2018**
(21) Anmeldenummer: 12174716.6
(22) Anmeldetag: 03.07.2012
(51) Int. Cl.: C08G 77/46, C08L 75/04

(54) **Polysiloxanpolyether-Copolymere mit Carbonatgruppen-haltigen (Polyether-)Resten und deren Verwendung als Stabilisatoren zur Herstellung von Polyurethanschäumen**
Polysiloxane polyether copolymers with (polyether) remnants containing carbonate groups and use of same as stabilisers for production of polyurethane foams
Copolymères de polyéther-siloxane avec résidus (de polyéther) contenant des groupes de carbonates et leur utilisation comme stabilisateurs pour la fabrication de mousses de polyuréthane

(30) Priorität: 03.08.2011 DE 102011109547
(43) Veröffentlichungstag der Anmeldung: 06.02.2013
(73) Patentinhaber: Evonik Degussa GmbH, 45128 Essen (DE)
(72) Erfinder: Hubel, Roland, 45136 Essen (DE); Schmitz, Sarah, 47198 Duisburg (DE); Ferenz, Michael, 45147 Essen (DE)

(56) Entgegenhaltungen:
- EP-B1- 0 867 464
- US-A1- 2010 286 295

## Beschreibung

Die vorliegende Erfindung betrifft Polysiloxanpolyether-Copolymere die mindestens einen (Polyether-)Rest aufweisen und dadurch gekennzeichnet sind, dass mindestens ein (Polyether-)Rest vorhanden ist, der mindestens einen Baustein -O-C(O)-O- aufweist, ein Verfahren zu deren Herstellung, die Verwendung der Polysiloxanpolyether-Copolymeren als Schaumstabilisatoren bei der Herstellung von Polyurethanschäumen.

Polyurethane unterschiedlicher Art werden durch die Polymerisation von Diisocyanaten wie 4,4'-Methylenbis(phenylisocyanat), kurz MDI, oder 2,4-Toluoldiisocyanat, kurz TDI, mit Polyetherpolyolen oder Polyesterpolyolen hergestellt. Die hierbei eingesetzten Polyetherpolyole werden durch die Alkoxylierung von polyhydroxyfunktionellen Startern wie z.B. Glykolen, Glycerin, Trimethylolpropan, Pentaerythrit, Sorbit oder Saccharose gewonnen. Bei der Herstellung von Polyurethanschäumen kommen zusätzliche Treibmittel zum Einsatz, wie z. B. Pentan, Methylenchlorid, Aceton oder Kohlendioxid. Unerlässlich für die reproduzierbare technische Herstellung von Schaumformteilen ist die Stabilisierung des Polyurethanschaums durch ein Tensid. Abseits von wenigen rein organischen Tensiden werden aufgrund ihres höheren Grenzflächenstabilisierungspotentials meist Silikontenside eingesetzt.

### Stand der Technik:

Eine Vielzahl verschiedener Polyurethanschäume, wie beispielsweise Heißweichschaum, Kaltschaum, Esterschaum, PUR-Hartschaum und PIR-Hartschaum sind bekannt. Die hierbei eingesetzten Stabilisatoren sind auf die jeweilige Endanwendung passgenau entwickelt und zeigen üblicherweise eine deutlich veränderte Performance, falls sie bei der Herstellung anderer Schaumarten eingesetzt werden.

In jüngerer Zeit sind modifizierte Silikontenside, insbesondere Polysiloxanpolyether-Copolymeren für die verschiedensten Schaumtypen entwickelt worden. Diese Polysiloxanpolyether unterscheiden sich insbesondere in Bezug auf die Struktur der enthaltenen Polyetherreste.

DE 102004001408 beschreibt die Verwendung blockweise aufgebauter Polyethersiloxane als Stabilisatoren in Polyurethanschäumen. DE 10 2006 042 338 beschreibt die Verwendung von Urethan- oder Harnstoffgruppen enthaltenden Polyethern zur Stabilisierung von Polyurethanschäumen. DE 102008043343 beschreibt Silikonpolyetherblock-Copolymere mit definierter Polydispersität im Polyoxyalkylenteil und deren Verwendung als Stabilisatoren zur Herstellung von Polyurethanschäumen. DE 102010063241 und DE 102010063237 beschreiben Silikonstabilisatoren für Polyurethan- oder Polyisocyanurat-Hartschaumstoffe. DE 102011003150 beschreibt Silikonpolyetherblock-Copolymere mit hochmolekularen Polyetherresten und deren Verwendung als Stabilisatoren zur Herstellung von Polyurethanschäumen. DE 102011003148 beschreibt die Verwendung von Silikonpolyetherblock-Copolymere mit hochmolekularen nicht endverkappten Polyetherresten als Stabilisatoren zur Herstellung von Polyurethanschäumen niedriger Dichte.

In den Patentschriften EP 0 900 811 wird der Zusatz von cyclischen organischen Carbonaten bei der Polyurethanschaumherstellung, insbesondere in Polyurethan-Polyether-Weichschaumformulierungen, ausgeführt.

Die EP 0 798 327 beschreibt einen Prozess für die Herstellung von Polycarbonat-Co-Polyetherdiolen in Form eines Zweistufenprozesses. In einem ersten Schritt wird ein Polyetherglycol mit Bisdimethylcarbonat in Anwesenheit eines basischen Katalysators zu einem Polyetherdiol-bisdimethylcarbonat umgesetzt um in einem anschließenden zweiten Schritt, nach destillativer Entfernung des Überschusses an Dimethylcarbonat und Entfernung des basischen Katalysators, durch sauer katalysierte Umesterung in einen Polycarbonat-Co-Polyetherdiolen überführt zu werden. Nachteilig ist hier die Aufarbeitung des Zwischenschritts und die Notwendigkeit das Katalysatorsystem zu wechseln.

Die US 5,525,640 beschäftigt sich ebenfalls mit Silicon-basierten Netzmitteln und deren Verwendung in mit Inertgasen getriebenem Polyurethanschaum. Kerngedanke der Lehre dieser Schrift ist, dass ein unter Inertgasdruck stehender Polyurethanschaum idealerweise mit einem Polyethersiloxan kammartiger Struktur zu stabilisieren sei, dessen Ethylenoxidanteil im Polyether weniger als 37% vom gesamten Alkylenoxid-Anteil ausmacht. Gestützt wird die Lehre durch vergleichende Verschäumungsversuche im Schlagschaum- aber auch Flüssig-CO₂-getriebenen Schaumsystem an vollständig mit Acetoxy- bzw. Methylgruppen verschlossenen, kammartigen Polyethersiloxanen. Als alternative, die Polyoxyalkylenzweige verschließende Endgruppen werden -C(O)Z', -C(O)OZ" oder -C(O)NHZ' beansprucht, wobei Z' monofunktionelle Alkyl- oder Arylgruppen von 1 bis 8 Kohlenstoffatomen umfasst. Eine besondere Bedeutung wird diesen Endgruppen nicht beigemessen, was sich auch darin manifestiert, dass der Acetat- und der Methyl-Endverschluß bevorzugt werden.

Die WO03/091320 befasst sich mit Silicon-basierten Netzmitteln, die besonders geeeignet sind, CO₂-getriebenen Polyurethanschaum bei feiner Zellstruktur flammhemmend auszustatten. Die Lehre der US 5,525,640 noch einmal aufgreifend, werden wieder kammartige Polyethersiloxane beansprucht, deren Ethylenoxidanteil im Polyether weniger als 37% vom gesamten Alkylenoxid-Anteil ausmacht und die neben den speziell beanspruchten Endverkappungen mit Acetat- und Methylgruppen im Polyoxyalkylenteil auch -C(O)Z', -CC(O)OZ' oder -C(O)NHZ' beansprucht, wobei Z¹ monofunktionelle Alkyl oder Arylgruppen von 1 bis 8 Kohlenstoffatomen umfasst.

Gleichfalls wird auch in der US 2010/0286295, die sich mit Silicon-basierten Netzmitteln für den Einsatz in von Pflanzenöl-Polyetherolen abgeleiteten Polyurethanschäumen beschäftigt und die das besondere Strukturprinzip Alkylgruppen aufweisender Siliconpolyether beansprucht, wiederum die in WO03/091320 aufgezeigte Möglichkeit des Organocarbonat-Endverschlusses beschrieben. Bevorzugt wird als Endverschluss wiederum ein Acetat- oder Methyl-Endverschluß beverwendet.

In jüngster Zeit wird auf umweltfreundliche Verfahrenstechnik sehr viel Wert gelegt. Um auf Treibmittel wie Methylenchlorid oder Fluorchlorkohlenwasserstoffe verzichten zu können, wird verstärkt Kohlendioxid (CO₂) als Treibmittel eingesetzt. Bei Weitem nicht alle Silikonstabilisatoren sind zur Verschäumung mit CO₂ als Treibmittel geeignet.

Ausgehend vom Stand der Technik bestand die Aufgabe der vorliegenden Erfindung in der Bereitstellung eines Stabilisators zur Stabilisierung von Polyurethanschäumen, der ein ausgewogenes Eigenschaftsprofil, insbesondere ein breites Verarbeitungsspiel, eine feine Zelle, eine gute Gasausbeute, eine gute Dichteverteilung, hinsichtlich der Stabilisierung von Polyurethanschäumen und eine ausgezeichnete Verträglichkeit mit allen gängigen physikalischen und chemischen Treibmitteln, insbesondere jedoch mit CO₂ als Treibmittel aufweist.

Überraschenderweise wurde gefunden, dass diese Aufgabe durch ein Polysiloxanpolyether-Copolymer, wie in den Ansprüchen definiert, gelöst wird.

Gegenstand der vorliegenden Erfindung sind deshalb Polysiloxanpolyether-Copolymere gemäß Anspruch 1, die mindestens einen (Polyether-)Rest aufweisen und dadurch gekennzeichnet sind, dass mindestens ein (Polyether-)Rest vorhanden ist, der mindestens einen Baustein -O-C(O)-Y-, mit Y wie unten definiert, aufweist.

Ebenfalls Gegenstand der vorliegenden Erfindung ist deshalb ein Verfahren zur Herstellung der erfindungsgemäßen Polysiloxanpolyether-Copolymeren gemäß Anspruch 3, welches dadurch gekennzeichnet ist, dass ein mindestens eine SiZ-Funktion aufweisendes Polyorganosiloxan mit mindestens einer organischen Verbindung, die mindestens eine Carbonat-Funktion und mindestens eine weitere zur Reaktion mit einer SiH-Funktion befähigte Gruppe (die von der Carbonat-Gruppe verschieden ist) aufweist, umgesetzt wird.

Außerdem ist Gegenstand der vorliegenden Erfindung die Verwendung der erfindungsgemäßen Polysiloxanpolyether-Copolymeren als Schaumstabilisatoren in einem Verfahren zur Herstellung von Polyurethanschaum, sowie die entsprechend hergestellten Polyurethanschäume.

Weitere Gegenstände der Erfindung sind gekennzeichnet durch die Inhalte der Unteransprüche, deren Inhalt vollumfänglich Teil des Offenbarungsgehalts der vorliegenden Beschreibung ist.

Die erfindungsgemäßen Polysiloxanpolyether-Copolymeren haben den Vorteil, dass bei Ihrer Verwendung in der Verschäumungen auf physikalische Treibmittel, wie z. B. Methylenchlorid oder Fluorchlorkohlenwasserstoffe verzichtet werden kann, aber nicht muss.

Die Verwendung der erfindungsgemäßen (Carbonat-Strukturen enthaltenden) Polysiloxanpolyether-Copolymeren (Silikonpolyetherblock-Copolymeren) hat weiterhin den Vorteil, dass exzellente Kompatibilität mit Treibmitteln wie CO₂ und folglich eine äußerst gute Kompatibilität von Treibmittel und Stabilisator erzielt werden kann. Dies hat zur Folge, dass Treibmittelkeime weniger zu Koagulation neigen und dadurch eine sehr feine Zellstruktur der resultierenden Polyurethanschäume erreicht werden kann.

Die erfindungsgemäßen Polysiloxanpolyether-Copolymeren und deren Verwendung hat weiterhin den Vorteil, dass insbesondere bei Verwendung von weiteren Carbonatstruktur-haltigen Ingredienzien in einer Verschäumungsrezeptur, dies können beispielsweise Carbonat-haltige Polyole sein, eine erhöhte Phasenkompatibilität in der Polyolkomponente des Polyurethansystems und damit im Vergleich zu den gemäß des Standes der Technik eingesetzten nicht Carbonathaltigen Polyether enthaltende Polyethersiloxanen erzielt werden kann.

Die Verwendung von erfindungsgemäßen Polysiloxanpolyether-Copolymeren hat ferner den Vorteil, dass auch bei Hartschaumanwendungen eine verbesserte Zellstruktur, eine geringere Lunkerrate und eine verringerte Wärmeleitfähigkeit im Vergleich zu den gemäß des Standes der Technik als Stabilisatoren eingesetzten Polyether enthaltende Polyethersiloxanen erhalten werden kann.

Die erfindungsgemäßen Polysiloxanpolyether-Copolymeren, deren Herstellung, sowie deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend %-Angaben gemacht, so handelt es sich, wenn nicht anders angegeben, um Angaben in Gewichts-%. Bei Zusammensetzungen beziehen sich die %-Angaben wenn nicht anders angegeben auf die Gesamtzusammensetzung. Werden nachfolgend Mittelwerte angegeben, so handelt es sich, wenn nicht anders angegeben um Zahlenmittel. Werden nachfolgend Messwerte angegeben, so wurden diese Messwerte, wenn nicht anders angegeben, bei einem Druck von 101325 Pa und einer Temperatur von 23°C ermittelt.

Die erfindungsgemäßen Polysiloxanpolyether-Copolymere, die mindestens einen (Polyether-)Rest aufweisen, zeichnen sich dadurch aus, dass mindestens ein (Polyether-)Rest vorhanden ist, der mindestens einen Baustein -O-C(O)-Y- mit Y = unabhängig voneinander NR^{Z}, O oder S, vorzugsweise O, und R^{Z} = gleich oder verschieden H oder Alkylrest, vorzugsweise H, aufweist.

Die erfindungsgemäßen Polysiloxanpolyether-Copolymere genügen der Formel (I): 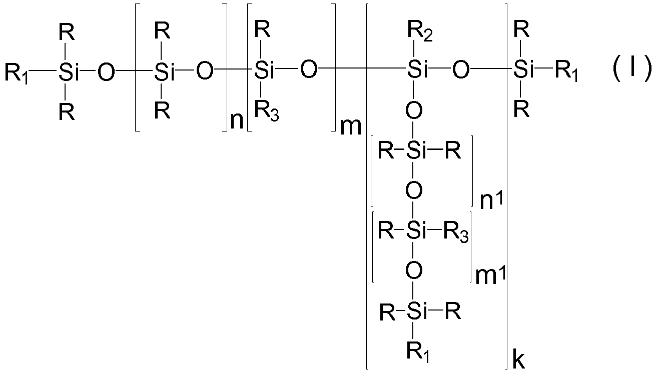 worin
n und n¹ unabhängig voneinander 0 bis 500, vorzugsweise 10 bis 200, insbesondere 15 bis 100 sind und (n+n¹) ≤ 500, vorzugsweise ≤ 200, insbesondere von > 0 bis ≤ 100 ist, m und m¹ unabhängig voneinander 0 bis 60, vorzugsweise 0 bis 30, insbesondere 0,1 bis 25 sind und (m+m¹) ≤ 60 ist, vorzugsweise ≤ 30, insbesondere von > 0 bis ≤ 25 ist, k = 0 bis 50 ist, vorzugsweise 0 bis 10 ist, insbesondere 0 oder von 1 bis 5 ist,
R = gleiche oder ungleiche Reste aus der Gruppe umfassend lineare, cyclische oder verzweigte, aliphatische oder aromatische, gesättigte oder ungesättigte Kohlenwasserstoffreste mit 1 bis zu 20 C-Atomen
-CH₂-R^{IV},
-CH₂-CH₂-(O)ₓ'-R^{IV},
-CH₂-CH₂-CH₂-O-CH₂-CH(OH)-CH₂OH, 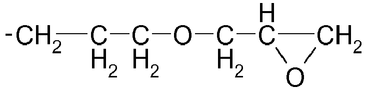 und
-CH₂-CH₂-CH₂-O-CH₂-C(CH₂OH)₂-CH₂-CH₃,
mit
x' gleich 0 oder 1 und
R^{IV} ein gegebenenfalls substituierter, gegebenenfalls mit Halogenen substituierter Kohlenwasserstoffrest mit 1 bis 50 Kohlenstoffatomen,
wobei R vorzugsweise ein Methylrest ist, wobei besonders bevorzugt alle Reste R Methylreste sind,
R₁ unabhängig voneinander R oder R₃ oder R₇ ist,
R₂ unabhängig voneinander R oder R₃ oder R₇ oder ein mit Heteroatomen substituierter, funktioneller, organischer, gesättigter oder ungesättigter Rest, vorzugsweise ausgesucht aus der Gruppe der Alkyl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Reste, besonders bevorzugt ein Methyl-, Chlorpropyl-, Vinyl- oder ein Methacryloxypropyl-Rest ist,
R₃ gleich oder verschieden -Qₗ-X-(R₈X-)_{w}-(CH₂-CH₂₀-)ₓ-(CH₂-CH(R')O-)_{y}-(C(O)-Y)ₚ-R"
mit
l = 0 oder 1,
X = unabhängig voneinander NR^{Z}, O oder S, vorzugsweise NR^{Z} oder O,
Y = unabhängig voneinander NR^{Z}, O oder S, vorzugsweise O,
R^{Z} = gleich oder verschieden H oder Alkylrest, vorzugsweise H,
Q = zweiwertiger Kohlenwasserstoffrest mit 2 bis 6 Kohlenstoffatomen, vorzugsweise Q = -CH₂-CH₂-CH₂- oder -CH₂-CH₂-
R₈ gleich oder verschieden verzweigter oder unverzweigter oder cyclischer, gesättigter oder ungesättigter Kohlenwasserstoffrest mit einer mindestens 2 Kohlenstoffatome aufweisenden Kohlenstoffkette zwischen den durch den Kohlenwasserstoffrest verbundenen Heteroatomen X, vorzugsweise ein linearer Kohlenwasserstoffrest -CⱼH₂ⱼ- mit j ≥ 2, vorzugsweise j = 4 bis 12, bevorzugt j = 6 bis 10,
w = 0 bis 200, vorzugsweise 1 bis 150, bevorzugt 3 bis 20,
x = 0 bis 200, vorzugsweise 5 bis 140, bevorzugt 10 bis 100,
y = 0 bis 200, vorzugsweise 5 bis 140, bevorzugt 10 bis 100,
p = 2 bis 10,
wobei die mit den Indizes w, x, y und p versehenen Bausteine blockweise oder statistisch angeordnet sein können,
R' = gleiche oder verschiedene, unsubstituierte oder gegebenenfalls substituierte, beispielsweise mit Alkylresten, Arylresten oder Halogenalkyl- oder Halogenarylresten substituierte, Alkyl- oder Arylgruppe mit insgesamt 1 bis 12 C-Atomen, vorzugsweise eine Methyl-, Ethyl- oder Butylgruppe, bevorzugt eine Methylgruppe und
R" = gleich oder verschieden ein Wasserstoffrest, eine Alkylgruppe mit 1 bis 30 C-Atomen, eine Gruppe -C(O)-R'" mit R'" = Alkylrest, eine Gruppe -CH₂-O-R', eine Alkylarylgruppe, wie z. B. eine Benzylgruppe, eine Gruppe -C(O)-O-R"" mit R"" = Alkylrest oder Alkylaryl, die Gruppe -C(O)-OR', die Gruppe -C(O)NH-R', oder eine Bindung zu einem Siliziumatom oder einem Rest Q der an ein Siliziumatom angebunden ist, wobei das Siliziumatom Bestandteil desselben Polysiloxangerüsts der Formel (I) oder eines anderen Polysiloxangerüstes der Formel (I) sein kann, vorzugsweise ein Alkyl-, insbesondere Methyl-, oder Acetylrest,
R₇ = Vernetzerrest, wie er sich z.B. aus Diallylverbindungen bzw. umgesetzten Diallylverbindungen ableiten kann,
mit der Maßgabe, dass mindestens ein Rest R₃ vorhanden ist, bei dem der Index p > 0 ist.

Vorzugsweise weist das erfindungsgemäße Polysiloxanpolyether-Copolymer der Formel (I) keinen Rest R⁷ auf.

Bevorzugt sind die erfindungsgemäßen Polysiloxanpolyether-Copolymere der Formel (I) nicht solche, bei denen einer oder vorzugsweise alle Reste R³ der Formel (IV)

-Qₗ-X-(R₈X-)_{w}-(CH₂-CH₂O-)ₓ-(CH₂-CH(R')O-)_{y}-(C(O)-Y)ₚ-(C(O)-O-R" (IV)

mit Q, l, X, R₈, w, x, y, Y, R' und p wie oben definiert und R" = Alkyl, vorzugsweise mit 1 bis 30 C-Atomen, genügen.

Es kann vorteilhaft sein, wenn in den Resten R³ die mit dem Index p bezeichneten Einheiten nicht direkt mit R" verbunden sind.

Das maximale Molekulargewicht, vorzugsweise das maximale mittlere Molekulargewicht der erfindungsgemäßen Polysiloxanpolyether-Copolymer, insbesondere jener der Formel (I) beträgt vorzugsweise kleiner 150000, bevorzugt kleiner 100000 und besonders bevorzugt von 1000 bis 80000 g/mol. Die Bestimmung der Molmasse kann z. B. durch Gelpermeationschromatographie (GPC) erfolgen.

Vorzugsweise ist die Summe aus w + x + y + p ≥ 2, bevorzugt von 6 bis 100. Bevorzugt ist die Summe aus p + x + y ≥ 2, vorzugsweise von 6 bis 80. Besonders bevorzugt ist die Summe aus p + x ≥ 2, vorzugsweise von 3 bis 50.

Sind in den erfindungsgemäßen Polysiloxanpolyether-Copolymeren sowohl Reste R₃ mit p = 0 als auch solche mit p>0 vorhanden, so beträgt das molare Verhältnis der Reste R₃ mit p = 0 zu solchen Resten R₃, bei denen p >0 ist, vorzugsweise von 50 zu 1 bis 1 zu 50, bevorzugt von 1 zu 20 bis 20 zu 1.

Bevorzugte erfindungsgemäße Polysiloxanpolyether-Copolymere der Formel (I) sind solche, bei denen n und n¹ unabhängig voneinander 3 bis 147 sind und (n+n¹) ≤ 150 ist, k 0 oder von 1 bis 5 ist, R = ein Methylrest ist, R₁ = R oder R₃, R₂ = R oder R₃ oder ein Chlorpropyl-, Vinyl- oder ein Methacryloxypropyl-Rest ist, und mindestens ein Rest R₃ gleich oder verschieden -Qₗ-X-(R₈X-)_{w}-(CH₂-CH₂O-)ₓ-(CH₂-CH(R')O-)_{y}-(C(O)-Y)ₚ-R" ist, mit l = 0 oder Q = -CH₂-CH₂-CH₂- wenn l = 1, R₈ = ein linearer Kohlenwasserstoffrest -CⱼH₂ⱼ- mit j = 4 bis 12, w = 0 oder 1 bis 100, x = 0 oder 5 bis 140, y = 0 oder 5 bis 140, mit der Maßgabe, dass die Summe x + y ≥ 5 ist, p = 2 bis 10, R' = gleich oder verschieden eine Phenyl-, Methyl- oder Ethylgruppe, bevorzugt eine Methylgruppe und R" einen Wasserstoffrest oder einen Methyl-, Butyl- oder Acetylrest bedeutet, mit der Maßgabe, dass mindestens ein Rest R₃ vorhanden ist.

Die verschiedenen Monomereinheiten der Polyorganosiloxankette und auch der Polyoxyalkylenkette können untereinander blockweise aufgebaut sein oder einer statistischen Verteilung unterliegen. Die in den hier angeführten Formeln wiedergegebenen Indexzahlen und die Wertbereiche der angegebenen Indizes verstehen sich daher als die Mittelwerte der möglichen statistischen Verteilung der tatsächlichen isolierten Strukturen und/oder deren Mischungen.

Der durchschnittliche molare Gehalt an Propylenoxideinheiten in den erfindungsgemäßen Polysiloxanpolyether-Copolymeren ist bevorzugt größer als derjenige an Ethylenoxideinheiten (y > x) wodurch die Stabilisatoren besonders bei der Verwendung CO₂-haltiger Treibmittel und/oder carbonathaltiger und/oder POreicher Polyole besonders gut geeignet sind.

Die erfindungsgemäßen Polysiloxanpolyether-Copolymere können auf verschiedene Weise hergestellt werden. Vorzugsweise erfolgt die Herstellung der erfindungsgemäßen Polysiloxanpolyether-Copolymere durch das nachfolgend beschriebene erfindungsgemäße Verfahren, durch welches die erfindungsgemäßen Polysiloxanpolyether-Copolymeren erhältlich sind.

Das erfindungsgemäße Verfahren zur Herstellung von Polysiloxanpolyether-Copolymeren, zeichnet sich dadurch aus, dass ein mindestens eine SiH-Funktion oder eine SiZ-Funktion, mit Z = Halogen, vorzugsweise Cl, aufweisendes Polyorganosiloxan mit mindestens einer organischen Verbindung, die mindestens eine Carbonat-Funktion und mindestens eine weitere zur Reaktion mit einer SiH-Funktion oder einer SiZ-Funktion befähigte Gruppe (die von der Carbonat-Gruppe verschieden ist) aufweist, umgesetzt wird. Es kann vorteilhaft sein, wenn neben einer oder mehreren organischen Verbindungen, die mindestens eine Carbonat-Funktion und mindestens eine weitere zur Reaktion mit einer SiH-Funktion oder SiZ-Funktion befähigte Gruppe (die von der Carbonat-Gruppe verschieden ist) aufweisen, ein oder mehrere Polyether eingesetzt werden, die keine Carbonat-Gruppe aufweisen, und mindestens eine zur Reaktion mit einer SiH-Funktion oder SiZ-Funktion befähigte Gruppe, vorzugsweise eine OH-Gruppe oder eine Vinly- oder Ethinylendgruppe aufweisen.

Die Umsetzung kann gemäß einem der aus dem Stand der Technik bekannten Verfahren erfolgen. Vorzugsweise wird die Umsetzung als edelmetallkatalysierte Hydrosilylierung durchgeführt, wie sie z. B. in EP 1 520 870 A1 beschrieben wird. Vorzugsweise wird die Umsetzung so durchgeführt, dass ein molarer Überschuss an SiH-reaktiven Gruppen, vorzugsweise ein 15 bis 50 mol-%iger und besonders bevorzugt ein 25 bis 35 mol-%iger Überschuß in Bezug auf die SiH-Gruppen vorliegt.

Als mindestens eine SiH-Funktion oder SiZ-Funktion aufweisende Polyorganosiloxane können verzweigte oder lineare Polyorganosiloxane mit endständigen und/oder seitenständigen SiH-Funktionen oder SiZ-Funktionen, oder Mischungen solcher Polyorganosiloxane eingesetzt werden. Vorzugsweise werden in dem erfindungsgemäßen Verfahren Polyorganosiloxane mit endständigen und/oder seitenständigen SiH-Funktionen oder SiZ-Funktionen, der Formel (II) eingesetzt, 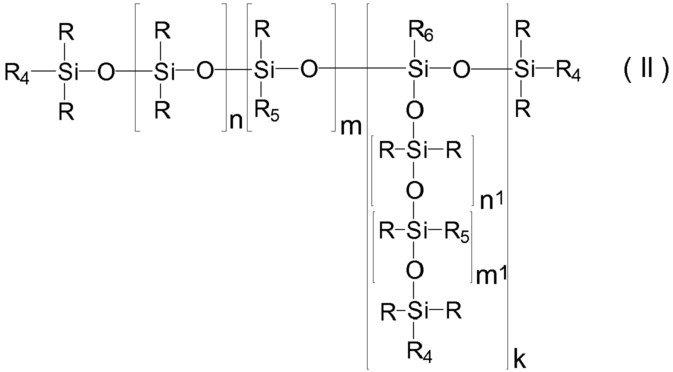 worin
n und n¹ unabhängig voneinander 0 bis 500, vorzugsweise 10 bis 200, insbesondere 15 bis 100 sind und (n+n¹) ≤ 500, vorzugsweise ≤ 200, insbesondere von > 0 bis ≤ 100 ist,
m und m¹ unabhängig voneinander 0 bis 60, vorzugsweise 0 bis 30, insbesondere 0,1 bis 25 sind und (m+m¹) ≤ 60, vorzugsweise ≤ 30, insbesondere von > 0 bis ≤ 25 ist,
k = 0 bis 50, vorzugsweise 0 bis 10 und insbesondere 0 oder 1 bis 5 ist,
R wie oben definiert
R₄ unabhängig voneinander Wasserstoff, Z oder R ist,
R₅ unabhängig voneinander Wasserstoff, Z oder R ist,
R₆ unabhängig voneinander Wasserstoff, Z, R oder ein mit Heteroatomen substituierter, funktioneller, organischer, gesättigter oder ungesättigter Rest, vorzugsweise ausgesucht aus der Gruppe der Alkyl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Reste, besonders bevorzugt ein Methyl-, Chlorpropyl-, Vinyl- oder ein Methacryloxypropyl-Rest ist,
mit der Maßgabe, dass mindestens einer der Reste R₄, R₅ und R₆ ein Wasserstoff oder Z, vorzugsweise Wasserstoff oder Cl, bevorzugt Wasserstoff ist.

Bevorzugt werden als mindestens eine SiH-Funktion oder eine SiZ-Funktion aufweisende Polyorganosiloxane mit endständigen und/oder seitenständigen SiH-Funktionen oder SiZ-Funktionen der Formel (II) eingesetzt, bei denen n und n¹ unabhängig voneinander 15 bis 100 sind und (n+n¹) ≤ 100 ist, k 0 oder von 1 bis 5 ist, R = ein Methylrest ist, und R₆ = R oder ein Chlorpropyl-, Vinyl- oder ein Methacryloxypropyl-Rest ist.

Die verwendeten Polyorganosiloxane mit mindestens einer SiH-Funktion, bevorzugt die verwendeten Polyorganosiloxane mit endständigen und/oder seitenständigen SiH-Funktionen der Formel (II) können wie im Stand der Technik, beispielsweise in der EP 1439200 B1 und DE 10 2007 055485 A1 beschrieben, hergestellt werden.

Die verwendeten Polyorganosiloxane mit mindestens einer SiZ-Funktion, insbesondere SiCI-Funktion, bevorzugt die verwendeten Polyorganosiloxane mit endständigen und/oder seitenständigen SiZ-Funktionen der Formel (II) können wie im Stand der Technik, beispielsweise in US 4,044,038 und der dort zitierten Literatur beschrieben, hergestellt werden.

Als organische Verbindung, die mindestens eine Carbonat-Funktion und mindestens eine weitere zur Reaktion mit einer SiH-Funktion befähigte Gruppe aufweist, wird vorzugsweise eine Verbindung eingesetzt, die als zur Reaktion mit einer SiH-Funktion befähigte Gruppe, eine Ethenyl- oder Ethinylendgruppe aufweist. Vorzugsweise wird als organische Verbindung, die mindestens eine Carbonat-Funktion und mindestens eine weitere zur Reaktion mit einer SiH-Funktion befähigte Gruppe aufweist, eine Verbindung eingesetzt, die als zur Reaktion mit einer SiH-Funktion befähigte Gruppe, eine Ethenylendgruppe aufweist.

Als organische Verbindung, die mindestens eine Carbonat-Funktion und mindestens eine weitere zur Reaktion mit einer SiZ-Funktion befähigte Gruppe aufweist, wird vorzugsweise eine Verbindung eingesetzt, die als zur Reaktion mit einer SiZ-Funktion befähigte Gruppe, eine HNR^{z}-Gruppe, eine HS-Gruppe oder eine HO-Gruppe aufweist. Vorzugsweise wird als organische Verbindung, die mindestens eine Carbonat-Funktion und mindestens eine weitere zur Reaktion mit einer SiZ-Funktion befähigte Gruppe aufweist, eine Verbindung eingesetzt, die als zur Reaktion mit einer SiZ-Funktion befähigte Gruppe, eine primäre HO-Gruppe aufweist.

Bevorzugt werden als organische Verbindungen, die mindestens eine Carbonat-Funktion und mindestens eine weitere zur Reaktion mit einer SiH-Funktion oder SiZ-Funktion befähigte Gruppe aufweisen, Polyether der Formel (III) eingesetzt,

Q'-X-(R₈X-)_{w}-(CH₂-CH₂O-)ₓ-(CH₂-CH(R')O-)_{y}-(C(O)-Y)ₚ-R^{V} (III)

mit Q' = H oder vorzugsweise CH₂=CH-(CH₂)_{q}- oder CH≡C-(CH₂)_{q}- und q = 0 oder 1, vorzugsweise 1, p = 1 bis 100, vorzugsweise 1 bis 10, R^{V} = gleich oder verschieden ein Wasserstoffrest, eine Alkylgruppe mit 1 bis 30 C-Atomen, eine Gruppe -C(O)-R'" mit R'" = Alkylrest, eine Gruppe -CH₂-O-R', eine Alkylarylgruppe, wie z. B. eine Benzylgruppe, eine Gruppe -C(O)-O-R"" mit R"" = Alkylrest oder Alkylaryl, die Gruppe -C(O)-OR', die Gruppe -C(O)NH-R', oder CH₂=CH-(CH₂)_{q}- oder CH≡C-(CH₂)_{q}- und q = 0 oder 1, vorzugsweise 1, vorzugsweise ein Alkyl-, insbesondere Methyl-, oder Acetylrest, und X, Y, w, x, y, R₈ und R' wie oben definiert. Vorzugsweise ist Q' in Formel (III) ein H oder eine Vinylgruppe (CH₂=CH-) oder Allylgruppe (CH₂=CH-CH₂-), bevorzugt eine Allylgruppe. Bevorzugt ist x+y in Formel (III) ungleich 0.

Bevorzugt wird in dem erfindungsgemäßen Verfahren ein Polyether der Formel (III) eingesetzt, bei dem Q' = CH₂=CH-CH₂-, X und Y jeweils O, R₈ = ein linearer Kohlenwasserstoffrest -CⱼH₂ⱼ- mit j = 4 bis 12, w = 0 oder 1 bis 100, bevorzugt 0, x = 0 oder 5 bis 140, bevorzugt 5 bis 40, y = 0 oder 5 bis 140, mit der Maßgabe, dass die Summe x + y ≥ 5 ist, p = 1 bis 10, R' = eine Methyl- oder Ethylgruppe, bevorzugt eine Methylgruppe und R^{V} einen Wasserstoffrest oder einen Methyl-, Butyl- oder Acetylrest bedeutet.

Ebenfalls bevorzugt wird in dem erfindungsgemäßen Verfahren ein Polyether der Formel (III) eingesetzt, bei dem Q' = H, X und Y jeweils O, R₈ = ein linearer Kohlenwasserstoffrest -CⱼH₂ⱼ- mit j = 4 bis 12, w = 0 oder 1 bis 100, bevorzugt 0, x = 0 oder 5 bis 140, bevorzugt 5 bis 40, y = 0 oder 5 bis 140, mit der Maßgabe, dass die Summe x + y ≥ 5 ist, p = 1 bis 10, R' = eine Methyl- oder Ethylgruppe, bevorzugt eine Methylgruppe und R^{V} einen Wasserstoffrest oder einen Methyl-, Butyl- oder Acetylrest bedeutet.

Geeignete organische Verbindungen, die mindestens eine Carbonat-Funktion und mindestens eine weitere zur Reaktion mit einer SiH-Funktion befähigte Gruppe aufweisen, können z. B. wie in Beispiel 1 angegeben oder in analoger Weise synthetisiert werden. Beispiele möglicher weiterer Synthesewege sind z. B. auch in US 2592058 aufgeführt.

Werden in dem erfindungsgemäßen Verfahren auch Polyether eingesetzt, die keine Carbonat-Gruppe aufweisen, und eine Vinyl- oder Ethinylendgruppe aufweisen, so werden vorzugsweise solche eingesetzt, die der Formel (IV) genügen,

Q'-X-(R₈X-)_{w}(CH₂-CH₂O-)ₓ-(CH₂-CH(R')O-)_{y}-R^{V} (IV)

mit Q' = H oder CH₂=CH-(CH₂)_{q}- oder CH≡C-(CH₂)_{q}- und q = 0 oder 1, vorzugsweise 1,
R^{V} = gleich oder verschieden ein Wasserstoffrest, eine Alkylgruppe mit 1 bis 30 C-Atomen, eine Gruppe -C(O)-R'" mit R'" = Alkylrest, eine Gruppe -CH₂-O-R', eine Alkylarylgruppe, wie z. B. eine Benzylgruppe, eine Gruppe -C(O)-O-R"" mit R"" = Alkylrest oder Alkylaryl, die Gruppe -C(O)-OR', die Gruppe -C(O)NH-R', oder CH₂=CH-(CH₂)_{q}- oder CH≡C-(CH₂)_{q}- und q = 0 oder 1, vorzugsweise 1, vorzugsweise ein Alkyl-, insbesondere Methyl-, oder Acetylrest,
und X, w, x, y, R₈ und R' wie oben definiert. Vorzugsweise ist Q' in Formel (IV) H oder eine Vinylgruppe (CH₂=CH-) oder Allylgruppe (CH₂=CH-CH₂-), bevorzugt eine Allylgruppe und X jeweils O. Bevorzugt ist x+y in Formel (III) ungleich 0.

Geeignete Polyether, die keine Carbonat-Gruppe aufweisen, und eine Vinyl- oder Ethinylendgruppe aufweisen, können insbesondere auch nach dem literaturbekannten Verfahren der alkalischen Alkoxylierung von einem eine Vinylgruppe aufweisenden Alkohol, insbesondere Allylalkohol, oder unter Verwendung von DMC-Katalysatoren wie im Stand der Technik, beispielsweise in der DE 10 2007 057145 A1, beschrieben, hergestellt werden.

Die erfindungsgemäßen Polysiloxanpolyether-Copolymeren oder die nach dem erfindungsgemäßen Verfahren hergestellten Polysiloxanpolyether-Copolymeren können als Schaumstabilisatoren bei der Herstellung von Polyurethanschäumen verwendet werden. Dabei können die Polysiloxanpolyether-Copolymere allein oder in Form einer Zusammensetzung eingesetzt werden. Bevorzugte Zusammensetzungen enthalten ein oder mehrere erfindungsgemäße Polysiloxanpolyether-Copolymere und zeichnen sich vorzugsweise dadurch aus, dass sie des weiteren eine oder mehrere bei der Herstellung von Polyurethanschäumen verwendbare Substanzen, ausgewählt aus Polyol, Nukleierungsmitteln, zellverfeinernden Additiven, Zellöffnern, Vernetzern, Emulgatoren, Flammschutzmitteln, Antioxidantien, Antistatika, Bioziden, Farbpasten, festen Füllstoffen, Katalysatoren, insbesondere Aminkatalysatoren und/oder Metallkatalysatoren und Puffersubstanzen, enthalten. Es kann vorteilhaft sein, wenn die erfindungsgemäß eingesetzte Zusammensetzung ein oder mehrere Lösungsmittel, vorzugsweise ausgewählt aus Glykolen, Alkoxylaten oder Ölen synthetischer und/oder natürlicher Herkunft, enthält.

Das Herstellverfahren der Polyurethanschäume unterscheidet sich bis auf die Verwendung der erfindungsgemäßen Polysiloxanpolyether-Copolymere nicht von den bekannten Verfahren und kann deshalb wie im Stand der Technik beschrieben durchgeführt werden.

Nachstehend sind eine Reihe von Schutzrechten angegeben, die geeignete Komponenten und Verfahren zur Herstellung der unterschiedlichen Polyurethanweichschaumstoff-Typen, d.h. Heiß-, Kalt- sowie Ester-Polyurethanweichschaumstoffe beschreiben, in denen die erfindungsgemäßen Polysiloxanpolyether-Copolymere eingesetzt werden können und auf die im vollen Umfang Bezug genommen wird: EP 0152878 A1; EP 0409035 A2; DE 102005050473 A1; DE 19629161 A1; DE 3508292 A1; DE 4444898 A1; EP 1061095 A1; EP 0532939 B1; EP 0867464 B1; EP1683831 A1; DE102007046860 A1.

Weitere Angaben zu verwendbaren Ausgangsstoffen, Katalysatoren sowie Hilfs- und Zusatzstoffen finden sich beispielsweise im Kunststoff-Handbuch, Band 7, Polyurethane, Carl-Hanser-Verlag München, 1. Auflage 1966, 2. Auflage, 1983 und 3. Auflage, 1993.

PU-Schäume und deren Herstellung sind allgemein z. B. in Ullmann's Encyclopedia of Industrial Chemistry, Stichwort Polyurethanes, Published Online: 15 JAN 2005, DOI: 10.1002/14356007.a21_665.pub2, Wiley-VCH Verlag GmbH & Co. KGaA, Weinheim und in der dort zitierten Literatur beschrieben.

Die erfindungsgemäßen Polysiloxanpolyether-Copolymere, insbesondere die der Formel (I), eignen sich besonders bevorzugt zur Verwendung als Schaumstabilisatoren bei der Herstellung von beispielsweise Polyurethan-Weichschaum, -Heißweichschaum, -Hartschaum, -Kaltschaum, -Esterschaum, viscoelastischem Weichschaum oder auch High Resilience-Schaum (HR-Schaum), ganz besonders bevorzugt als Polyurethan-Heißweichschaumstabilisatoren und Polyurethan-Hartschaumstabilisatoren.

Die erfindungsgemäßen Polysiloxanpolyether-Copolymere werden als Stabilisatoren vorzugsweise in Verfahren zur Herstellung von Polyurethanschaum verwendet, bei denen Wasser oder Kohlendioxid, bevorzugt Kohlendioxid als Treibmittel eingesetzt wird. Als Treibmittel können aber auch zusätzlich oder an Stelle von Wasser und/oder CO₂ Treibmittel wie Methylenchlorid, Pentan, Alkane, halogenierte Alkane, Aceton und/oder Cyclopentan eingesetzt werden. Wird CO₂ als Treibmittel eingesetzt, so beträgt der Anteil an CO₂ im eingesetzten Treibmittel vorzugsweise mindestens 5 Gew.-%, bevorzugt mindestens 50 Gew.-% und besonders bevorzugt mindestens 80 Gew.-%, bezogen auf die Summe der eingesetzten Treibmittel.

Bei der erfindungsgemäßen Verwendung Polysiloxanpolyether-Copolymere bei der Herstellung der Polyurethanschäume kann es vorteilhaft sein, wenn als Polyole teilweise oder ausschließlich Polyethercarbonat-Polyole eingesetzt werden. Solche Polyethercarbonat-Polyole und deren Verwendung werden z. B. in EP 2 287 226 beschrieben.

Durch die Verwendung der erfindungsgemäßen Polysiloxanpolyether-Copolymere sind die erfindungsgemäßen Polyurethanschäume erhältlich, die mindestens ein erfindungsgemäßes Polysiloxanpolyether-Copolymer enthalten oder gemäß der erfindungsgemäßen Verwendung hergestellt wurden.

Der erfindungsgemäße Polyurethanschaum enthält vorzugsweise CO₂ als Treibmittel. Bevorzugt beträgt der Anteil an CO₂ bezogen auf die Summe der im Polyurethanschaum vorhandenen Treibmittel bzw. auf die Summe der bei einem Druck von 101325 Pa und einer Temperatur von 23°C gasförmig vorliegenden Bestandteile des Polyurethanschaums mindestens 5 Gew.-%, vorzugsweise mindestens 50 Gew.-% und bevorzugt mindestens 80 Gew.-%.

Mit dem erfindungsgemäßen Polyurethanschaum sind Artikel zugänglich, die diesen Polyurethanschaum enthalten oder aus ihm bestehen. Solche Artikel können z. B. Möbelpolster, Kühlschrankisolierungen, Sprühschäume, Metallverbundelemente für die (Bau-)Isolierung, Matratzen oder Autositzen sein. Die Auflistungen sind als überlappend anzusehen und als nicht abschließend zu verstehen.

Weiterhin können die erfindungsgemäßen Polysiloxanpolyether-Copolymeren bei der Herstellung von Polyurethan-basierten Kunststoffen, als Tenside für flüssig-CO₂-Extraktion, als oberflächenaktive Substanz für dry-cleaning oder als Emulgator für kosmetische Anwendungen verwendet werden.

Der Gegenstand der vorliegenden Erfindung wird nachfolgend an Hand von Beispielen näher erläutert, ohne dass der Gegenstand der Erfindung auf diese beispielhaften Ausführungsformen beschränkt sein soll.

### Beispiele:

### Beispiel 1: Herstellung von Polyethern mit Carbonatstruktur

30,03 g Triethylenglykol, 47,3 g Diethylcarbonat und 0,1 g Butyltitanat wurden in einen Einhalskolben eingewogen und unter Rückfluss gekocht (T_{Öl} = 155 °C). Nach 2,5 Stunden wurde begonnen Destillat abzunehmen. Bei dem Destillat handelte es sich um Ethanol, welches bei der Reaktion frei wurde und verworfen wurde. Nach abgeschlossener Destillation wurden 20,4 g Allyloxyethanol und 0,1 g Butyltitanat zugesetzt und es wurde abermals bei einer Ölbadtemperatur von 155°C unter Rückfluss gekocht. Nach erfolgter Abnahme des erneut entstehenden Destillats wurde ein Vakuum von 300 bis 500 mbar angelegt und abschließend bei 20 mbar endgetrocknet. Es wurde eine gelblich bräunliche Flüssigkeit erhalten, die nach Filtration mittels Weißband Rundfilterpapier klar war.

Die Bestimmung der Molgewichte Mₙ und M_{w} erfolgte durch Gelpermeationschromatographie unter den folgenden Messbedingungen: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung gegen Polypropylenglykol-Standard.

Des Weiteren kann die Synthese entsprechender Polyether über DMC-Katalyse erfolgen. Diese Methode ist Stand der Technik und kann dem Patent EP2287226A1 entnommen werden.

Verwendete Polyether gemäß Formel (III) jeweils mit Q = CH₂=CH-CH₂- und R' =-CH₃:
Polyether I: X = O, w = 0, x = 4, y = 0, p = 2, Y = O
Polyether II: X = O, w = 0, x = 5, y = 0, p = 2, Y = O
Polyether III: X = O, w = 0, x = 9, y = 0, p = 3, Y = O
Polyether IV: X = O, w = 0, x = 1, y = 6 mit R' = CH₃, p = 4, Y = O
Polyether V: X = O, w = 0, x = 0, y = 12 mit R' = CH₃, p = 0, R" = -C(=O)-CH₃
Polyether VI: X = O, w = 0, x = 32, y = 30 mit R' = CH₃, p = 0, R" = -C(=O)-CH₃

Die Herstellung der Wasserstoffsiloxane erfolgte wie in der EP 1439200 B1 im erfindungsgemäßen Beispiel 1 beschrieben. Die verwendeten Wasserstoffsiloxane sind gemäß Formel (II) wie folgt definiert.
R, R₄ = CH₃, k = 0, n = 6,5, m = 61,5

Die Herstellung der in Tabelle 1 und Tabelle 2 aufgeführten Polyethersiloxane erfolgt wie in der WO 2009/065644 in Beispiel 7 beschrieben

**Tabelle 1: verwendete Polyethersiloxane und prozentualer molarer Anteil der darin verwendeten Polyether**

| Stabilisator Bsp. | erfindungsgemäß | PE I | PE II | PE III | PE IV | PE V | PE VI |
|---|---|---|---|---|---|---|---|
| 1 | ja | 15 | | | | 55 | 30 |
| 2 | ja | | 15 | | | 55 | 30 |
| 3 | ja | | | 15 | | 55 | 30 |
| 4 | ja | | | | 15 | 55 | 30 |

### Beispiel 2: Herstellung von Polyurethanschäumen in der Handverschäumung unter Verwendung von Stabilisatoren, die Polyether mit Carbonatstruktur enthalten und einem Vergleichsstabilisator

Zur Herstellung der Polyurethanschäume wurde folgende Rezeptur verwendet: 100 Gew.-Teile Polyetherol (Hydroxylzahl = 48 mg KOH/g, 11-12 % EO), 5 Gew.-Teile Wasser, 5 Gew.-Teile Methylenchlorid, 0.6 Gew.-Teil der Silikonstabilisatoren, die mit Hilfe u.a. der in Tabelle 2 angeführten Polyether-Polysiloxan-Beispiele mit Carbonatstruktur hergestellt wurden, 0,15 Gew.-Teile eines tertiären Amins, 64,2 Gew.-Teile Toluoldiisocyanat T 80 (Index 115), sowie 0,23 Gew.-Teile KOSMOS® 29 (Evonik Goldschmidt GmbH). Bei der Verschäumung wurden 300 g Polyol eingesetzt, die anderen Formulierungsbestandteile wurden entsprechend umgerechnet.

Zur Verschäumung wurden das Polyol, Wasser, Amin, Zinnkatalysator und Silikonstabilisator unter Rühren gut vermischt. Nach Zugabe von Methylenchlorid und Isocyanat wurde mit einem Rührer 7 Sek. bei 3000 U / min gerührt. Das erhaltene Gemisch wurde in einen mit Papier ausgekleideten Holzkasten (Grundfläche 27 cm x 27 cm) gegossen. Es entstand ein Schaumstoff, der den nachfolgend beschriebenen anwendungstechnischen Tests unterzogen wurde.

### Beispiel 3: Herstellung von Polyurethanschäumen in der CO₂-Verschäumung unter Verwendung von Stabilisatoren, die Polyether mit Carbonatstruktur enthalten und einem Vergleichsstabilisator

Zur Herstellung der Polyurethanschäume mittels CO₂ als Treibmittel wurde folgende Rezeptur verwendet: 100 Gew.-Teile Polyetherol (Hydroxylzahl = 48 mg KOH/g), 6 Gew.-Teile Wasser, 0,8 Gew.-Teil Silikonstabilisator, 0,11 Gew.-Teile eines tertiären Amins (TEGOAMIN® B75 der Evonik Goldschmidt GmbH), 68,6 Gew.-Teile Toluoldiisocyanat T 80 (Index 105), sowie 0,18 Gew.-Teil an KOSMOS® 29 (Evonik Goldschmidt GmbH) und 3,07 Gew.-Teile CO₂.

Die Verschäumung wurde mit Hilfe einer NovaFlex-Anlage durchgeführt. Es wurde ein Polyol-Ausstoß von 4500 g/min eingestellt, die anderen Formulierungsbestandteile wurden entsprechend umgerechnet.
Es wurde ein Siebsatz mit vier Sieben verwendet, wobei Durchlässigkeit und Lochgröße wie folgt festgelegt sind: Sieb I: 16% Durchlässigkeit bei einer Lochgröße von 85 µ, Sieb II + III: 2,2% Durchlässigkeit bei einer Lochgröße von 100 µ, Sieb IV: 23% Durchlässigkeit bei einer Lochgröße von 100 µ. Folgende weitere Parameter sind zu beachten: Creamer: 40 mm, Gasbeladung: 10 NL Stickstoff, Mischerdrehzahl: 2500 min⁻¹, Drosseldruck: 50 bar, Abnahmedauer: ca. 3 Sekunden, Vorlaufzeit: 15 Sekunden.

Polyol, TDI und Additive werden in die Mischkammer eingespeist. Das Gemisch fließt durch ein kurzes Rohr in das Austragsgerät ("Creamer"). An den Drucksieben wird das Gemisch entspannt, das CO₂ tritt aus und bildet den Froth. Dieser Froth läuft in eine mit Papier ausgelegte Verschäumungsbox der Maße 26,5 x 26,5 x 26,5 cm. Es entstand ein Schaumstoff, der den nachfolgend beschriebenen anwendungstechnischen Tests unterzogen wurde.

Vergleichend wurden Schäume unter Verwendung eines konventionellen Stabilisators (TEGOSTAB® B 8228) hergestellt, welcher bei einer Verschäumung mit Kohlendioxid als Treibmittel ein unregelmäßiges, gröberes Zellbild liefert. Die Verbesserung der Zellstruktur durch den Einsatz carbonathaltiger Stabilisatorstrukturen konnte so eindeutig festgestellt werden.

### Physikalische Eigenschaften der Schäume

Die hergestellten Schäume wurden anhand folgender physikalischer Eigenschaften beurteilt:
a) Steigzeit:
   Zeitdifferenz zwischen Eingießen der Eduktmischung und Abblasen des Polyurethanschaumstoffes.
b) Rücksacken des Schaumstoffes nach dem Ende der Steigphase (= Rückfall):
   Der Rückfall, bzw. das Nachsteigen ergibt sich aus der Differenz der Schaumhöhe nach direktem Abblasen und nach 3 min. nach Abblasen des Schaums. Die Schaumhöhe wird dabei durch eine an einem Zentimetermaß befestigte Nadel auf dem Maximum in der Mitte der Schaumkuppe gemessen.
c) Schaumhöhe:
   Die Endhöhe des Schaums wird dadurch bestimmt, dass der Rückfall bzw. das Nachsteigen von bzw. zu der Schaumhöhe nach dem Abblasen subtrahiert bzw. addiert wird.
d) Luftdurchlässigkeit / Porosität:
   Die Luftdurchlässigkeit bzw. Porosität des Schaumes wurde durch eine Staudruckmessung am Schaumstoff ermittelt. Der gemessene Staudruck wurde in mm Alkoholsäule angegeben, wobei die niedrigeren Staudruckwerte den offeneren Schaum charakterisieren. Die Werte wurden im Bereich von 0 bis 300 mm gemessen.
e) Zellstruktur:
   Eine horizontale 0,8 cm dicke Schaumscheibe wird 10 cm vom Boden des Schaumkörpers herausgeschnitten und visuell mit fünf Standardschaumscheiben verglichen, die verschiedene Zellstrukturqualitäten aufweisen. Die Kennzeichnung 1 beschreibt starke Vergröberung insbesondere im Randbereich, während die Kennzeichnung 5 eine regelmäßige, feine Zelle wiedergibt.
f) Raumgewicht (RG) / Dichte:
   Die Bestimmung erfolgt wie in ASTM D 3574 - 08 unter Test A beschrieben durch Messung der Core Density.
g) Froth
   Der sogenannte Froth (Schaum, der unmittelbar aus dem Mischkopf austritt), wird subjektiv vom Verschäumer beurteilt. Die verschiedenen Kategorien des Froth sind folgender Tabelle 2 zu entnehmen:

**Tabelle 2: Beurteilungskategorien "Froth"**

| **Kategorie** | | **Beschreibung** | **Feinheit** | | **Blasengröße ca. in mm** | **Beschreibung** |
|---|---|---|---|---|---|---|
| **A** | flüssig/ fließfähig | Gemisch füllt die Kiste rasch aus | **0** | grob | >2 | wie Badewannenscha um |
| | | | **1** | mittel | <2 | etwa wie Bierschaum, nicht so steif |
| | | | **2** | fein | <0,5 | wie flüssige Sahne |
| **B** | mittel | wie A, jedoch mit höherer Viskosität | **0** | grob | >2 | wie Badewannenscha um |
| | | "Wellenbildung" | **1** | mittel | <2 | wie Bierschaum |
| | | | **2** | fein | <0,5 | wie flüssige Sahne |
| **C** | steif | Gemisch schichtet sich wulstartig übereinander | **1** | mittel | <2 | Rasierschaum mit etwas gröberen Blasen |
| | | | **2** | fein | <0,5 | Rasierschaum |
| **D** | steif/ "fransig" | Gemisch schichtet sich wulstartig übereinander | **1** | mittel | <2 | wie zu steifgeschlagene Sahne mit etwas gröberen Blasen |
| | | | **2** | fein | <0,5 | wie zu steifgeschlagene Sahne |

| | | | | | | |
|---|---|---|---|---|---|---|
| Die Blasengröße (Blasendurchmesser) wurde optisch abgeschätzt. Das Optimum der Beurteilung gemäß Froth stellt die Kategorie B2 dar. | | | | | | |

Die Ergebnisse der Handverschäumung sind in Tabelle 3 zusammengefasst.

**Tabelle 3: Verschäumungsergebnisse der Stabilisatoren 1 bis 4 (Handverschäumung) und Standardstabilisator TEGOSTAB® B 8228 (Bsp. 0)**

| Schaum Nr. | Stabilisator | Steigzeit [s] | Rückfall [cm] | Schaum höhe [cm] | Luftdurchlässigkeit [mm] |
|---|---|---|---|---|---|
| I | 0 | 81 | 0,8 | 32,5 | 21 |
| II | 1 | 80 | 2,6 | 30,6 | 8 |
| III | 2 | 79 | 2,4 | 30,8 | 7 |
| IV | 3 | 79 | 2,5 | 30,6 | 9 |
| V | 4 | 78 | 2,5 | 30,8 | 8 |

Wie aus Tabelle 3 ersichtlich ist, werden bei Verwendung von Schaumstabilisatoren, die Polyether mit Carbonatstruktur enthalten (Beispiel-Nr. 1-4) in der normalen Handverschäumung stabile, offenzellige Schäume erhalten.

Die Ergebnisse der CO₂-Verschäumung sind in Tabelle 4 zusammengefasst.

**Tabelle 4: Verschäumungsergebnisse der Beispielschäume a bis e (CO₂-Verschäumung)**

| Schaum Nr. | Stabilisator | Rückfall [cm] | froth [Beurteilung] | Dichte [kg/m³] | Beurteilung |
|---|---|---|---|---|---|
| a | 0 | 1,2 | B2 | 15,8 | 1 |
| b | 1 | 1,1 | B2 | 14,9 | 1,5 |
| c | 2 | 1,2 | B2 | 14,4 | 3 |
| d | 3 | 1,2 | B2 | 14,7 | 2,5 |
| e | 4 | 1,7 | B2 | 14,7 | 3 |

Die Ergebnisse der CO₂-Verschäumung zeigen, dass bereits der teilweise Austausch der Polyether durch carbonathaltige Strukturen zu einer signifikanten Verbesserung der Zellstruktur führt. Im Vergleich zu einem Schaum, der mittels eines konventionellen Stabilisators (TEGOSTAB® B8228) erhalten wurde, erhielten die Beispielschäume c bis e sogar eine Bewertung von 2-3, was darauf schließen lässt, dass eingetragenes CO₂ wesentlich besser emulgiert werden kann, bzw. die Nukleierung durch einen Carbonatstruktur-haltigen Stabilisator wesentlich erleichtert wird.

## Patentansprüche

1. Polysiloxanpolyether-Copolymere die mindestens einen (Polyether-)Rest aufweisen, **dadurch gekennzeichnet, dass** mindestens ein (Polyether-)Rest vorhanden ist, der mindestens einen Baustein -O-C(O)-Y-, mit Y = unabhängig voneinander NR^{Z}, O oder S, und R^{Z} = gleich oder verschieden H oder Alkylrest, aufweist, wobei das Polysiloxanpolyether-Copolymer der Formel (I) genügt: 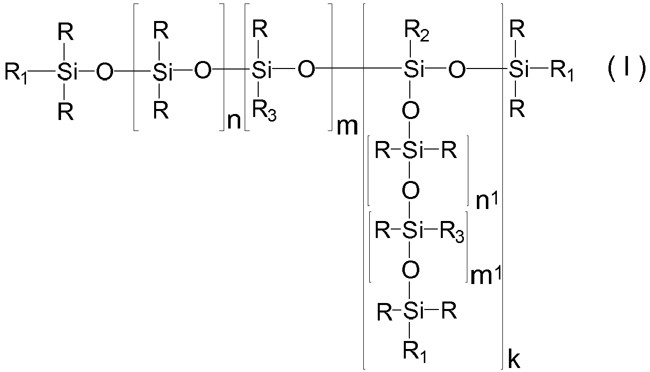 worin
n und n¹ unabhängig voneinander 0 bis 500, vorzugsweise 10 bis 200, insbesondere 15 bis 100 sind und (n+n¹) ≤ 500, vorzugsweise ≤ 200, insbesondere von > 0 bis ≤ 100 ist, m und m¹ unabhängig voneinander 0 bis 60, vorzugsweise 0 bis 30, insbesondere 0,1 bis 25 sind und (m+m¹) ≤ 60 ist, vorzugsweise ≤ 30, insbesondere von > 0 bis ≤ 25 ist, k = 0 bis 50 ist, vorzugsweise 0 bis 10 ist, insbesondere 0 oder von 1 bis 5 ist,
R = gleiche oder ungleiche Reste aus der Gruppe umfassend lineare, cyclische oder verzweigte, aliphatische oder aromatische, gesättigte oder ungesättigte Kohlenwasserstoffreste mit 1 bis zu 20 C-Atomen
-CH₂-R^{IV},
-CH₂-CH₂-(O)ₓ'-R^{IV},
-CH₂-CH₂-CH₂-O-CH₂-CH(OH)-CH₂OH, 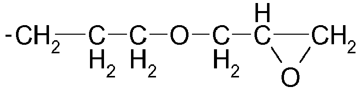 und
-CH₂-CH₂-CH₂-O-CH₂-C(CH₂OH)₂-CH₂-CH₃,
mit
x'gleich 0 oder 1 und
R^{IV} ein gegebenenfalls substituierter, gegebenenfalls mit Halogenen substituierter Kohlenwasserstoffrest mit 1 bis 50 Kohlenstoffatomen,
wobei R vorzugsweise ein Methylrest ist, wobei besonders bevorzugt alle Reste R Methylreste sind,
R₁ unabhängig voneinander R oder R₃ oder R₇ ist,
R₂ unabhängig voneinander R oder R₃ oder R₇ oder ein mit Heteroatomen substituierter, funktioneller, organischer, gesättigter oder ungesättigter Rest, vorzugsweise ausgesucht aus der Gruppe der Alkyl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Reste, besonders bevorzugt ein Methyl-, Chlorpropyl-, Vinyl- oder ein Methacryloxypropyl-Rest ist,
R₃ gleich oder verschieden -Q_{I}-X-(R₈X-)_{w}-(CH₂-CH₂O-)ₓ-(CH₂-CH(R')O-)_{y}-(C(O)-Y)ₚ-R"
mit
I = 0 oder 1,
X = unabhängig voneinander NR^{Z}, O oder S, vorzugsweise NR^{Z} oder O, Y = unabhängig voneinander NR^{Z}, O oder S, vorzugsweise O,
R^{Z} = gleich oder verschieden H oder Alkylrest, vorzugsweise H,
Q = zweiwertiger Kohlenwasserstoffrest mit 2 bis 6 Kohlenstoffatomen, vorzugsweise Q = -CH₂-CH₂-CH₂- oder -CH₂-CH₂-R₈ gleich oder verschieden verzweigter oder unverzweigter oder cyclischer, gesättigter oder ungesättigter Kohlenwasserstoffrest mit einer mindestens 2 Kohlenstoffatome aufweisenden Kohlenstoffkette zwischen den durch den Kohlenwasserstoffrest verbundenen Heteroatomen X, vorzugsweise ein linearer Kohlenwasserstoffrest -CⱼH₂ⱼ- mit j ≥ 2, vorzugsweise j = 4 bis 12, bevorzugt j = 6 bis 10,
w = 0 bis 200, vorzugsweise 1 bis 150, bevorzugt 3 bis 20,
x = 0 bis 200, vorzugsweise 5 bis 140, bevorzugt 10 bis 100,
y = 0 bis 200, vorzugsweise 5 bis 140, bevorzugt 10 bis 100,
p = 2 bis 10
wobei die mit den Indizes w, x, y und p versehenen Bausteine blockweise oder statistisch angeordnet sein können,
R' = gleiche oder verschiedene, unsubstituierte oder gegebenenfalls substituierte, beispielsweise mit Alkylresten, Arylresten oder Halogenalkyl- oder Halogenarylresten substituierte, Alkyl- oder Arylgruppe mit insgesamt 1 bis 12 C-Atomen, vorzugsweise eine Methyl- oder Ethylgruppe, bevorzugt eine Methylgruppe und
R" = gleich oder verschieden ein Wasserstoffrest, eine Alkylgruppe mit 1 bis 30 C-Atomen, eine Gruppe -C(O)-R'" mit R'" = Alkylrest, eine Gruppe-CH₂-O-R', eine Alkylarylgruppe, wie z. B. eine Benzylgruppe, eine Gruppe -C(O)-O-R"" mit R"" = Alkylrest oder Alkylaryl, die Gruppe -C(O)-OR', die Gruppe -C(O)NH-R', oder eine Bindung zu einem Siliziumatom oder einem Rest Q der an ein Siliziumatom angebunden ist, wobei das Siliziumatom Bestandteil desselben Polysiloxangerüsts der Formel (I) oder eines anderen Polysiloxangerüst der Formel (I) sein kann, vorzugsweise ein Alkyl-, insbesondere Methyl-, oder Acetylrest,
R₇ = Vernetzerrest,
mit der Maßgabe, dass mindestens ein Rest R₃ vorhanden ist, bei dem der Index p > 0 ist.

2. Polysiloxanpolyether-Copolymer gemäß Anspruch 1, **dadurch gekennzeichnet, dass** es durch ein Verfahren gemäß einem der Ansprüche 3 bis 8 erhältlich ist.

3. Verfahren zur Herstellung von Polysiloxanpolyether-Copolymeren wie in Anspruch 1 oder 2 charakterisiert, **dadurch gekennzeichnet, dass** ein mindestens eine SiH-Funktion oder eine SiZ-Funktion, mit Z = Halogenatom, aufweisendes Polyorganosiloxan mit mindestens einer organischen Verbindung, die mindestens eine Carbonat-Funktion und mindestens eine weitere zur Reaktion mit einer SiH-Funktion oder einer SiZ-Funktion befähigte Gruppe aufweist, umgesetzt wird.

4. Verfahren nach Anspruch 3, **dadurch gekennzeichnet, dass** als organische Verbindung, die mindestens eine Carbonat-Funktion und mindestens eine weitere zur Reaktion mit einer SiH-Funktion oder einer SiZ-Funktion befähigte Gruppe aufweist, eine Verbindung eingesetzt wird, die als zur Reaktion mit einer SiH-Funktion befähigte Gruppe, eine Ethenyl- oder Ethinylendgruppe aufweist.

5. Verfahren nach mindestens einem der Ansprüche 3 oder 4, **dadurch gekennzeichnet, dass** als mindestens eine SiH-Funktion oder eine SiZ-Funktion aufweisendes Polyorganosiloxan Polyorganosiloxane mit endständigen und/oder seitenständigen SiH-Funktionen oder SiZ-Funktionen, der Formel (II) eingesetzt werden, 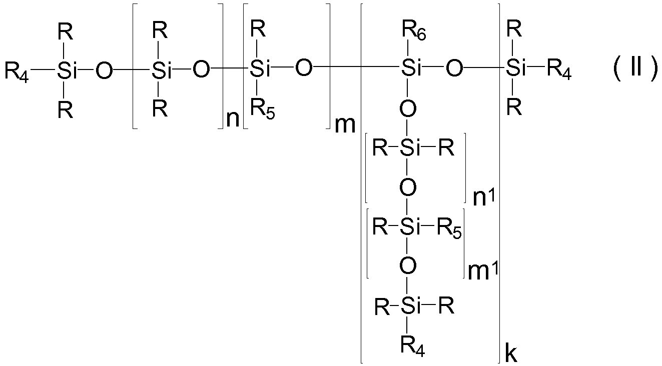 worin
n und n¹ unabhängig voneinander 0 bis 500, vorzugsweise 10 bis 200, insbesondere 15 bis 100 sind und (n+n¹) ≤ 500, vorzugsweise ≤ 200, insbesondere von > 0 bis ≤ 100 ist,
m und m¹ unabhängig voneinander 0 bis 60, vorzugsweise 0 bis 30, insbesondere 0,1 bis 25 sind und (m+m¹) ≤ 60, vorzugsweise ≤ 30, insbesondere von > 0 bis ≤ 25 ist,
k = 0 bis 50, vorzugsweise 0 bis 10 und insbesondere 0 oder 1 bis 5 ist,
R wie oben definiert
R₄ unabhängig voneinander Wasserstoff, Z oder R ist,
R₅ unabhängig voneinander Wasserstoff, Z oder R ist,
R₆ unabhängig voneinander Wasserstoff, Z, R oder ein mit Heteroatomen substituierter, funktioneller, organischer, gesättigter oder ungesättigter Rest, vorzugsweise ausgesucht aus der Gruppe der Alkyl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Reste, besonders bevorzugt ein Chlorpropyl-, Vinyl- oder ein Methacryloxypropyl-Rest ist,
mit der Maßgabe, dass mindestens einer der Reste R₄, R₅ und R₆ ein Wasserstoff oder Z ist.

6. Verfahren nach Anspruch 5, **dadurch gekennzeichnet, dass** als mindestens eine SiH-Funktion oder eine SiZ-Funktion aufweisendes Polyorganosiloxan Polyorganosiloxane mit endständigen und/oder seitenständigen SiH-Funktionen oder SiZ-Funktionen, der Formel (II) eingesetzt werden, bei denen dass n und n¹ unabhängig voneinander 15 bis 100 sind und (n+n¹) ≤ 100 ist, k 0 oder von 1 bis 5 ist, R = ein Methylrest ist, und R₆ = R oder ein Chlorpropyl-, Vinyl- oder ein Methacryloxypropyl-Rest ist.

7. Verfahren nach einem der Ansprüche 4 bis 6, **dadurch gekennzeichnet, dass** neben einer oder mehreren organischen Verbindungen, die mindestens eine Carbonat-Funktion und mindestens eine weitere zur Reaktion mit einer SiH-Funktion oder SiZ-Funktion befähigte Gruppe (die von der Carbonat-Gruppe verschieden ist) aufweisen, ein oder mehrere Polyether eingesetzt werden, die keine Carbonat-Gruppe aufweisen, und mindestens eine zur Reaktion mit einer SiH-Funktion oder SiZ-Funktion befähigte Gruppe aufweisen.

8. Verfahren nach Anspruch 7, **dadurch gekennzeichnet, dass** als Polyether, die keine Carbonat-Gruppe aufweisen, solche eingesetzt werden, die der Formel (IV) genügen
Q'-X-(R₈X-)_{w}-(CH₂-CH₂O-)ₓ-(CH₂-CH(R')O-)_{y}-R^{V} (IV)
mit Q' = H oder CH₂=CH-(CH₂)_{q}- oder CH≡C-(CH₂)_{q}- und q = 0 oder 1, vorzugsweise 1, und X, w, x, y, R₈, R' und R^{V} wie in Anspruch 6 oder 7 definiert definiert.

9. Verwendung von Polysiloxanpolyether-Copolymeren gemäß einem der Ansprüche 1 oder 2 oder hergestellt gemäß einem der Ansprüche 3 bis 8 als Schaumstabilisatoren bei der Herstellung von Polyurethanschäumen, bei der Herstellung von Polyurethan-basierten Kunststoffen, als Tenside für flüssig-CO₂-Extraktion, als oberflächenaktive Substanz für dry-cleaning oder als Emulgator für kosmetische Anwendungen.

10. Verwendung nach Anspruch 9, **dadurch gekennzeichnet, dass** bei der Herstellung der Polyurethanschäume CO₂ als Treibmittel eingesetzt wird.

11. Verwendung nach Anspruch 9 oder 10, **dadurch gekennzeichnet, dass** bei der Herstellung der Polyurethanschäume Polyethercarbonat-Polyole eingesetzt werden.

12. Polyurethanschaum, enthaltend mindestens ein Polysiloxanpolyether-Copolymer gemäß einem der Ansprüche 1 bis 2 oder hergestellt gemäß einem der Ansprüche 3 bis 8.

## Claims

1. Polysiloxane polyether copolymers which comprise at least one (polyether) moiety, **characterized in that** at least one (polyether) moiety is present which comprises a unit -O-C(O)-Y-, where Y = mutually independently NR^{Z}, O or S, and R^{Z} = being identical or different, H or alkyl moiety, wherein the polysiloxane polyether copolymer complies with the formula (I) : 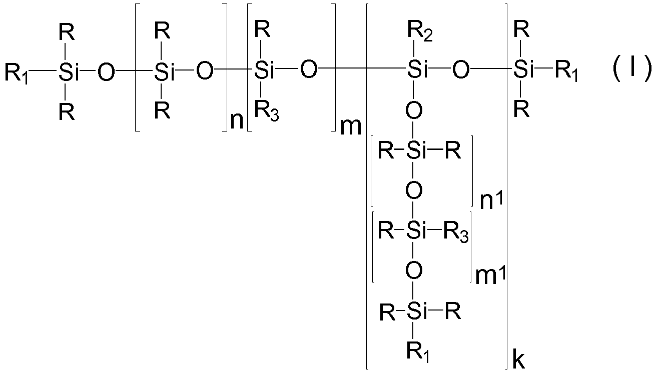 in which
n and n¹ are mutually independently from 0 to 500, preferably from 10 to 200, in particular from 15 to 100 and (n+n¹) ≤ 500, preferably ≤ 200, in particular from > 0 to ≤ 100, m and m¹ are mutually independently from 0 to 60, preferably from 0 to 30, in particular from 0.1 to 25 and (m+m¹) ≤ 60, preferably ≤ 30, in particular from > 0 to ≤ 25, k = 0 to 50, preferably from 0 to 10, in particular from 0 or from 1 to 5,
R = identical or non-identical moieties from the group consisting of linear, cyclic or branched, aliphatic or aromatic, saturated or unsaturated hydrocarbon moieties having from 1 to 20 carbon atoms
-CH₂-R^{IV},
-CH₂-CH₂-(O)ₓ'-R^{IV},
-CH₂-CH₂-CH₂-O-CH₂-CH(OH)-CH₂OH, 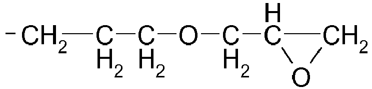 and
-CH₂-CH₂-CH₂-O-CH₂-C(CH₂OH)₂-CH₂-CH₃,
where x' is 0 or 1 and
R^{IV} is an optionally substituted hydrocarbon moiety optionally substituted with halogens and having from 1 to 50 carbon atoms,
where R is preferably a methyl moiety, and where all of the moieties R are particularly preferably methyl moieties,
R₁ is mutually independently R or R₃ or R₇,
R₂ is mutually independently R or R₃ or R₇ or a functional, saturated or unsaturated, organic moiety substituted with heteroatoms and preferably selected from the group of the alkyl, chloroalkyl, chloroaryl, fluoroalkyl, cyanoalkyl, acryloxyaryl, acryloxyalkyl, methacryloxyalkyl, methacryloxypropyl or vinyl moieties, particularly preferably a methyl, chloropropyl, vinyl or methacryloxypropyl moiety,
R₃, being identical or different, is -Qₗ-X-(R₈X-)_{w}-(CH₂-CH₂O-)ₓ-(CH₂-CH(R')O-)_{y}-(C(O)-Y)ₚ-R"
where
1 = 0 or 1,
X = mutually independently NR^{Z}, O or S, preferably NR^{Z} or O,
Y = mutually independently NR^{Z}, O or S, preferably O,
R^{Z} = being identical or different, H or alkyl moiety, preferably H,
Q = divalent hydrocarbon moiety having from 2 to 6 carbon atoms, and preferably Q = -CH₂-CH₂-CH₂- or-CH₂-CH₂-,
R₈, being identical or different, is a branched or unbranched, cyclic, saturated or unsaturated hydrocarbon moiety having, between the heteroatoms X connected by the hydrocarbon moiety, a carbon chain comprising at least 2 carbon atoms, preferably a linear hydrocarbon moiety -CⱼH₂ⱼ-, where j ≥ 2, preferably j = 4 to 12, and with preference j = from 6 to 10,
w = 0 to 200, preferably 1 to 150, with preference 3 to 20,
x = 0 to 200, preferably 5 to 140, with preference 10 to 100,
y = 0 to 200, preferably 5 to 140, with preference 10 to 100,
p = 2 to 10,
where the units provided with the indices w, x, y and p can have blockwise or random arrangement,
R' = identical or different alkyl or aryl group, unsubstituted or optionally substituted, for example with alkyl moieties, with aryl moieties or with haloalkyl moieties or with haloaryl moieties and having a total of from 1 to 12 carbon atoms, preferably a methyl or ethyl group, with preference a methyl group, and
R" = being identical or different, a hydrogen moiety, an alkyl group having from 1 to 30 carbon atoms, a -C(O)-R'" group, where R'" = alkyl moiety, a -CH₂-O-R' group, an alkylaryl group, e.g. a benzyl group, a -C(O)-O-R'''' group, where R''" = alkyl moiety or alkylaryl, the -C(O)-OR' group, the -C(O)NH-R' group, or a bond to a silicon atom or to a moiety Q bonded to a silicon atom, where the silicon atom can be a constituent of the same polysiloxane skeleton of the formula (I) or of another polysiloxane skeleton of the formula (I), preferably an alkyl moiety, in particular methyl moiety, or an acetyl moiety,
R₇ = crosslinking agent moiety,
with the proviso that at least one moiety R₃ is present in which the index p > 0.

2. Polysiloxane polyether copolymer according to Claim 1, **characterized in that** it is obtainable through a process according to any of Claims 3 to 8.

3. Process for producing polysiloxane polyether copolymers as **characterized in** Claim 1 or 2, **characterized in that** a polyorganosiloxane having at least one SiH function or one SiZ function, where Z = halogen atom, is reacted with at least one organic compound which has at least one carbonate function and at least one other group capable of reaction with an SiH function or with an SiZ function.

4. Process according to Claim 3, **characterized in that** the organic compound used which has at least one carbonate function and at least one other group capable of reaction with an SiH function or with an SiZ function comprises a compound which has, as group capable of reaction with an SiH function, an ethenyl end group or ethynyl end group.

5. Process according to at least one of Claims 3 and 4, **characterized in that** the polyorganosiloxane used having at least one SiH function or one SiZ function comprises polyorganosiloxanes having terminal and/or pendent SiH functions or SiZ functions, of the formula (II) 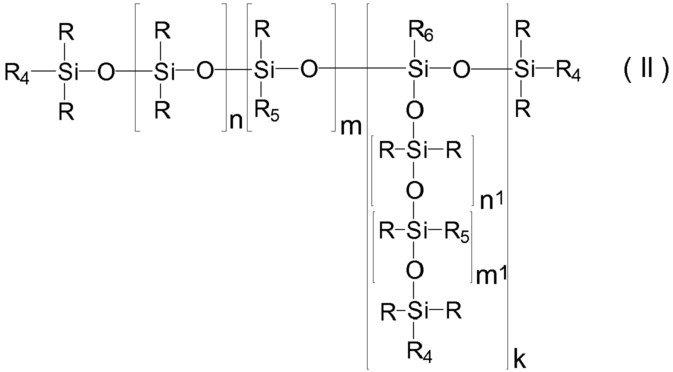 in which
n and n¹ are mutually independently from 0 to 500, preferably from 10 to 200, in particular from 15 to 100 and (n+n¹) ≤ 500, preferably ≤ 200, in particular from > 0 to ≤ 100,
m and m¹ are mutually independently from 0 to 60, preferably from 0 to 30, in particular from 0.1 to 25 and (m+m¹) ≤ 60, preferably ≤ 30, in particular from > 0 to ≤ 25,
k = 0 to 50, preferably from 0 to 10 and in particular 0 or from 1 to 5,
R is as defined above,
R₄ is mutually independently hydrogen, Z or R,
R₅ is mutually independently hydrogen, Z or R,
R₆ is mutually independently hydrogen, Z, R or a functional, saturated or unsaturated, organic moiety substituted with heteroatoms and preferably selected from the group alkyl, chloroalkyl, chloroaryl, fluoroalkyl, cyanoalkyl, acryloxyaryl, acryloxyalkyl, methacryloxyalkyl, methacryloxypropyl or vinyl moieties, particularly preferably a chloropropyl, vinyl or methacryloxypropyl moiety,
with the proviso that at least one of the moieties R₄, R₅ and R₆ is hydrogen or Z.

6. Process according to Claim 5, **characterized in that** the polyorganosiloxane used having at least one SiH function or one SiZ function comprises polyorganosiloxanes having terminal and/or pendent SiH functions or SiZ functions, of the formula (II), where n and n¹ are mutually independently from 15 to 100 and (n+n¹) ≤ 100, k is 0 or from 1 to 5, R = a methyl moiety, and R₆ = R or a chloropropyl, vinyl or methacryloxypropyl moiety.

7. Process according to any of Claims 4 to 6, **characterized in that**, alongside one or more organic compounds which have at least one carbonate function and at least one other group (differing from the carbonate group) capable of reaction with an SiH function or SiZ function, one or more polyethers are used which have no carbonate group, and have at least one group capable of reaction with an SiH function or SiZ function.

8. Process according to Claim 7, **characterized in that** the polyethers used which have no carbonate group comprise those complying with the formula (IV)
Q'-X-(R₈X-)_{w}-(CH₂-CH₂O-)ₓ-(CH₂-CH(R')O-)_{y}-R^{V} (IV)
where Q' = H or CH₂=CH-(CH₂)_{q}- or CH≡C-(CH₂)_{q}- and q = 0 or 1, preferably 1, and X, w, x, y, R₈, R' and R^{V} are as defined in Claim 6 or 7.

9. Use of polysiloxane polyether copolymers according to either of Claims 1 and 2 or produced according to any of Claims 3 to 8 as foam stabilizers in the production of polyurethane foams, in the production of polyurethane-based plastics, as surfactants for liquid-CO₂ extraction, as surfactant substance for dry cleaning or as emulsifier for cosmetic applications.

10. Use according to Claim 9, **characterized in that** CO₂ is used as blowing agent in the production of the polyurethane foams.

11. Use according to Claim 9 or 10, **characterized in that** polyether carbonate polyols are used in the production of the polyurethane foams.

12. Polyurethane foam comprising at least one polysiloxane polyether copolymer according to either of Claims 1 and 2 or produced according to any of Claims 3 to 8.

## Revendications

1. Copolymères de polysiloxane-polyéther qui comprennent au moins un radical (polyéther), **caractérisés en ce qu'**au moins un radical (polyéther) est présent, qui comprend au moins un constituant -O-C(O)-Y-, avec les Y = indépendamment les uns des autres NR^{z}, O ou S, et R^{z} = de manière identique ou différente, H ou un radical alkyle, le copolymère de polysiloxane-polyéther satisfaisant la formule (I) : 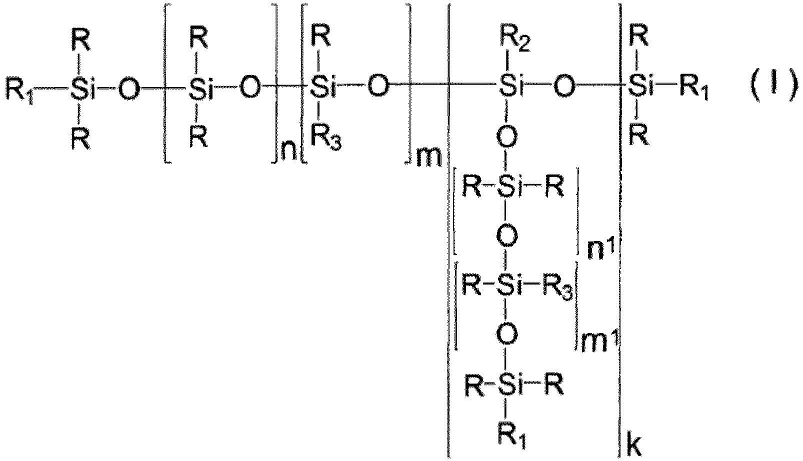 dans laquelle
n et n¹ représentent indépendamment l'un de l'autre 0 à 500, de préférence 10 à 200, notamment 15 à 100, et (n+n¹) ≤ 500, de préférence ≤ 200, notamment de > 0 à ≤ 100, m et m¹ représentent indépendamment l'un de l'autre 0 à 60, de préférence 0 à 30, notamment 0,1 à 25, et (m+m¹) ≤ 60, de préférence ≤ 30, notamment de > 0 à ≤ 25, k = 0 à 50, de préférence 0 à 10, notamment 0 ou de 1 à 5,
R = radicaux identiques ou différents du groupe comprenant les radicaux hydrocarbonés linéaires, cycliques ou ramifiés, aliphatiques ou aromatiques, saturés ou insaturés, de 1 à 20 atomes C,
-CH₂- R^{IV},
-CH₂-CH₂-(O)ₓ'-R^{IV},
-CH₂-CH₂-CH₂-O-CH₂-CH(OH)-CH₂OH, 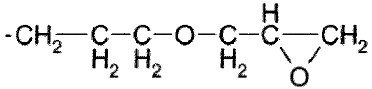 et
-CH₂-CH₂-CH₂-O-CH₂-C(CH₂OH)₂-CH₂-CH₃,
avec
x' représentant 0 ou 1, et
R^{IV} représentant un radical hydrocarboné éventuellement substitué, éventuellement substitué avec des halogènes, de 1 à 50 atomes de carbone,
R étant de préférence un radical méthyle, tous les radicaux R étant de manière particulièrement préférée des radicaux méthyle,
les R₁ représentent indépendamment les uns des autres R ou R₃ ou R₇,
les R₂ représentent indépendamment les uns des autres R ou R₃ ou R₇ ou un radical fonctionnel organique saturé ou insaturé, substitué avec des hétéroatomes, de préférence choisi dans le groupe constitué par les radicaux alkyle, chloroalkyle, chloroaryle, fluoroalkyle, cyanoalkyle, acryloxyaryle, acryloxyalkyle, méthacryloxyalkyle, méthacryloxypropyle ou vinyle, de manière particulièrement préférée un radical méthyle, chloropropyle, vinyle ou méthacryloxypropyle,
les R³ représentent de manière identique ou différente -Qₗ-X-(R₈X-)_{w}-(CH₂-CH₂O-)ₓ-(CH₂-CH(R')O-)_{y}-(C(O)-Y)ₚ-R",
avec
l = 0 ou 1,
les X = indépendamment les uns des autres, NR^{z}, O ou S, de préférence NR^{z} ou O,
les Y = indépendamment les uns des autres, NR^{z}, O ou S, de préférence O,
les R^{z} = de manière identique ou différente, H ou un radical alkyle, de préférence H,
Q = un radical hydrocarboné bivalent de 2 à 6 atomes de carbone, de préférence Q = -CH₂-CH₂-CH₂- ou -CH₂-CH₂-, les R₈ représentent de manière identique ou différente un radical hydrocarboné ramifié ou non ramifié ou cyclique, saturé ou insaturé, comprenant une chaîne carbonée qui comprend au moins 2 atomes de carbone entre les hétéroatomes X reliés par le radical hydrocarboné, de préférence un radical hydrocarboné linéaire -CⱼH₂ⱼ- avec j ≤ 2, de préférence j = 4 à 12, avantageusement j = 6 à 10,
w = 0 à 200, de préférence 1 à 150, avantageusement 3 à 20,
x = 0 à 200, de préférence 5 à 140, avantageusement 10 à 100,
y = 0 à 200, de préférence 5 à 140, avantageusement 10 à 100,
p = 2 à 10,
les constituants munis des indices w, x, y et p pouvant être agencés séquentiellement ou statistiquement,
les R' = de manière identique ou différente, un groupe alkyle ou aryle non substitué ou éventuellement substitué, par exemple substitué avec des radicaux alkyle, des radicaux aryle ou des radicaux halogénoalkyle ou halogénoaryle, contenant au total 1 à 12 atomes C, de préférence un groupe méthyle ou éthyle, avantageusement un groupe méthyle, et
les R" = de manière identique ou différente, un radical hydrogène, un groupe alkyle de 1 à 30 atomes C, un groupe -C(O)-R''' avec R''' = radical alkyle, un groupe -CH₂-O-R', un groupe alkylaryle, tel que p. ex. un groupe benzyle, un groupe -C(O)-O-R'''' avec R'''' = radical alkyle ou alkylaryle, le groupe -C(O)-OR', le groupe -C(O)NH-R', ou une liaison à un atome de silicium ou un radical Q qui est relié à un atome de silicium, l'atome de silicium pouvant faire partie du même squelette polysiloxane de formule (I) ou d'un autre squelette polysiloxane de formule (I), de préférence un radical alkyle, notamment méthyle, ou acétyle,
R₇ = radical réticulant,
à condition qu'au moins un radical R₃ soit présent pour lequel l'indice p > 0.

2. Copolymère de polysiloxane-polyéther selon la revendication 1, **caractérisé en ce qu'**il peut être obtenu par un procédé selon l'une quelconque des revendications 3 à 8.

3. Procédé de fabrication de copolymères de polysiloxane-polyéther tels que caractérisés dans la revendication 1 ou 2, **caractérisé en ce qu'**un polyorganosiloxane comprenant au moins une fonction SiH ou une fonction SiZ, avec Z = atome d'halogène, est mis en réaction avec au moins un composé organique, qui comprend au moins une fonction carbonate et au moins un autre groupe apte à la réaction avec une fonction SiH ou une fonction SiZ.

4. Procédé selon la revendication 3, **caractérisé en ce qu'**en tant que composé organique, qui comprend au moins une fonction carbonate et au moins un autre groupe apte à la réaction avec une fonction SiH ou une fonction SiZ, un composé qui comprend en tant que groupe apte à la réaction avec une fonction SiH un groupe terminal éthényle ou éthinyle est utilisé.

5. Procédé selon au moins l'une quelconque des revendications 3 ou 4, **caractérisé en ce qu'**en tant que polyorganosiloxane comprenant au moins une fonction SiH ou une fonction SiZ, des polyorganosiloxanes comprenant des fonctions SiH ou des fonctions SiZ terminales et/ou latérales de formule (II) sont utilisés, 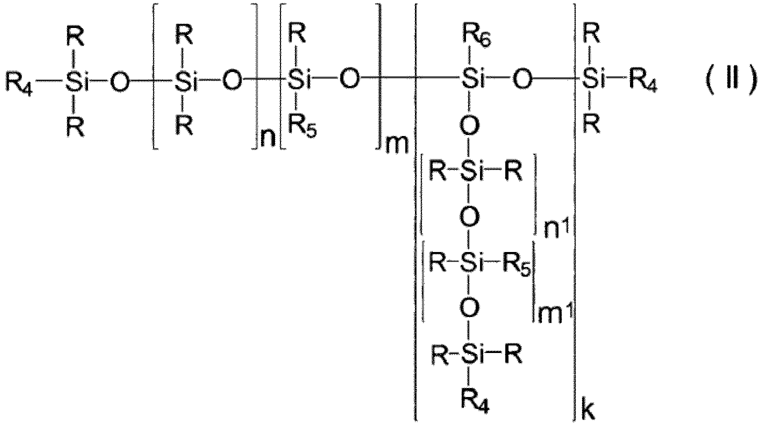 dans laquelle
n et n¹ représentent indépendamment l'un de l'autre 0 à 500, de préférence 10 à 200, notamment 15 à 100, et (n+n¹) ≤ 500, de préférence ≤ 200, notamment de > 0 à ≤ 100,
m et m¹ représentent indépendamment l'un de l'autre 0 à 60, de préférence 0 à 30, notamment 0,1 à 25, et (m+m¹) ≤ 60, de préférence ≤ 30, notamment de > 0 à ≤ 25,
k = 0 à 50, de préférence 0 à 10, et notamment 0 ou de 1 à 5,
les R sont tels que définis précédemment,
les R₄ représentent indépendamment les uns des autres hydrogène, Z ou R,
les R₅ représentent indépendamment les uns des autres hydrogène, Z ou R,
les R₆ représentent indépendamment les uns des autres hydrogène, Z, R ou un radical fonctionnel organique saturé ou insaturé, substitué avec des hétéroatomes, de préférence choisi dans le groupe constitué par les radicaux alkyle, chloroalkyle, chloroaryle, fluoroalkyle, cyanoalkyle, acryloxyaryle, acryloxyalkyle, méthacryloxyalkyle, méthacryloxypropyle ou vinyle, de manière particulièrement préférée un radical chloropropyle, vinyle ou méthacryloxypropyle,
à condition qu'au moins un des radicaux R₄, R₅ et R₆ représentent un hydrogène ou Z.

6. Procédé selon la revendication 5, **caractérisé en ce qu'**en tant que polyorganosiloxane comprenant au moins une fonction SiH ou une fonction SiZ, des polyorganosiloxanes comprenant des fonctions SiH ou des fonctions SiZ terminales et/ou latérales de formule (II) sont utilisés, dans lesquels n et n¹ représentent indépendamment l'un de l'autre 15 à 100, et (n+n¹) ≤ 100, k représente 0 ou de 1 à 5, R = un radical méthyle, et R₆ = R ou un radical chloropropyle, vinyle ou méthacryloxypropyle.

7. Procédé selon l'une quelconque des revendications 4 à 6, **caractérisé en ce qu'**en plus d'un ou de plusieurs composés organiques qui comprennent au moins une fonction carbonate et au moins un autre groupe apte à la réaction avec une fonction SiH ou une fonction SiZ (qui est différent du groupe carbonate), un ou plusieurs polyéthers sont utilisés, qui ne comprennent pas de groupe carbonate, et qui comprennent au moins un groupe apte à la réaction avec une fonction SiH ou une fonction SiZ.

8. Procédé selon la revendication 7, **caractérisé en ce qu'**en tant que polyéthers qui ne comprennent pas de groupe carbonate, des polyéthers qui satisfont la formule (IV) sont utilisés
Q'-X-(R₈X-)_{w}-(CH₂-CH₂O-)ₓ-(CH₂-CH(R')O-)_{y}-R^{v} (IV)
avec Q' = H ou CH₂=CH- (CH₂)_{q}- ou CH≡C- (CH₂)_{q}- et q = 0 ou 1, de préférence 1, et X, w, x, y, R₈, R' et R^{v} tels que définis dans la revendication 6 ou 7.

9. Utilisation de copolymères de polysiloxane-polyéther selon l'une quelconque des revendications 1 ou 2 ou fabriqués selon l'une quelconque des revendications 3 à 8 en tant que stabilisateurs de mousse lors de la fabrication de mousses de polyuréthane, lors de la fabrication de plastiques à base de polyuréthane, en tant que tensioactifs pour l'extraction de CO₂ liquide, en tant que substance tensioactive pour le nettoyage à sec ou en tant qu'émulsifiant pour des applications cosmétiques.

10. Utilisation selon la revendication 9, **caractérisée en ce que** du CO₂ est utilisé en tant qu'agent gonflant lors de la fabrication des mousses de polyuréthane.

11. Utilisation selon la revendication 9 ou 10, **caractérisée en ce que** des polyéthercarbonate-polyols sont utilisés lors de la fabrication des mousses de polyuréthane.

12. Mousse de polyuréthane, contenant au moins un copolymère de polysiloxane-polyéther selon l'une quelconque des revendications 1 à 2 ou fabriqué selon l'une quelconque des revendications 3 à 8.
